# EUROPÄISCHE PATENTANMELDUNG

(11) **EP 1 452 775 A1**
(43) Veröffentlichungstag der Anmeldung: **01.09.2004**
(21) Anmeldenummer: 04003782.2
(22) Anmeldetag: 19.02.2004
(51) Int. Cl.: F16H 7/08

(54) **Spann- und Dämpfungselement für Synchronriemengetriebe**

(30) Priorität: 25.02.2003 DE 10307853; 05.09.2003 DE 10340966
(71) Anmelder: EBERT Kettenspanntechnik GmbH, 04435 Schkeuditz (DE)
(72) Erfinder: Ebert, Siegfried, 04435 Schkeuditz (DE); Meier, Hartmut, 06779 Schierau OT Möst (DE); Nendel, Klaus, 09569 Oederan (DE); Sumpf, Jens, 09366 Stollberg (DE)

(57) **Zusammenfassung**

Die Erfindung betrifft ein Spann- und Dämpfungselement für Synchronriemengetriebe.

Sie ist anwendbar im Maschinenbau.

Der Mangel bekannter Spann- und Dämpfungselemente mit rotationaler Elastizität besteht im widersprüchlichen Eingriffsverhalten zur Veränderung des Zahnkopf- bzw. Zahnlückenabstandes im lasttrumseitigen und lostrumseitigen Eingriffsbereich.

Daraus folgen ein unpräziser, von periodischen Schwingungen überlagerter Lauf des Spann- und Dämpfungselementes, erhöhter Verschleiß der Arbeitsflanken der Zähne am Riemen und am Spann- und Dämpfungselement selbst sowie unerwünscht hohe Laufgeräusche.

Ein bekanntes reibschlüssig kontaktierendes Spann- und Dämpfungselement ist rotational homogen, aber ohne Lagesicherungsfunktion in Synchronriemengetrieben mit unterschiedlichen Scheibendurchmessern.

Das Problem wird gelöst durch ein Spann- und Dämpfungselement aus einem rotational elastischen Käfig mit der geometrischen Grundform eines Kreiszylinders mit einer zum Synchronriemen formkorrespondenten Teilung. Der elastische Käfig integriert die Elemente Arbeitsringe (1, 2) und Zahnstege (3).

## Beschreibung

Die Erfindung betrifft ein Spann- und Dämpfungselement für Synchronriemengetriebe. Sie ist anwendbar im Maschinenbau. Synchronriemen werden als Zugmittel zur synchronen Übertragung von Drehmomenten in allen Bereichen des Maschinenbaus eingesetzt. Bedingung für die Momentübertragung, die Drehphasenpräzision und die Betriebssicherheit ist die genaue Einstellung und Einhaltung der Vorspannkraft des Riemens.
Durch die WO 97/10453 ist ein Spann- und Dämpfungselement für Riemengetriebe bekannt, welches als ringförmiges, elastisch rotational verformbares Element zwischen Lasttrum und Leertrum angeordnet ist und ständig auf beide Trume mit gleicher diametral gerichteter Spannkraft und gleicher Dämpfung wirkt.
Wird eine der Riemenscheiben angetrieben, kommen die Trume in eine gegenläufige Bewegung und wegen des Eingriffs des Zahnprofils des Ringes kommt dieser in Drehbewegung.
Insbesondere die Figuren 1, 4, und 5 der WO 97/10453 zeigen die Anordnung dieser Spannvorrichtung im Riemengetriebe, wobei das Riemengetriebe stets im LeerlaufZustand bzw. im Stand dargestellt ist.
Die Besonderheit dieser ellipsenähnlichen Verformung des vorher kreisförmigen Spann- und Dämpfungselementes ist eine zwischen Hauptscheitelbereichen und Nebenscheitelbereichen wechselnde Zahnlückendeformation.
In den Nebenscheitelbereichen bestehen gegenüber dem konzentrischen Normalzustand des Spann- und Dämpfungselementes gestauchte (verengte) Zahnlücken, in den Hauptscheitelbereichen bestehen dagegen gedehnte (geöffnete) Zahnlücken.
In den Wechselphasen von den Hauptscheitelbereichen zu den Nebenscheitelbereichen bestehen nahezu spannungsfreie Bereiche ohne Zahnlückendeformation.
Im radial inneren Ringbereich befindet sich, vereinfacht betrachtet, ein spannungsfreier Bereich, der als neutrale Biegefaser bezeichnet wird.
Dieser Effekt tritt - invertiert - ebenfalls beim gezahnten Riemen auf. In einem mit den ringförmigen Spann- und Dämpfungselement ausgerüsteten Getriebe ist der gezahnte Riemen im Eingriffsbereich mit dem Spann- und Dämpfungselement gekrümmt, wobei sich die Zahnseite immer radial unterhalb der neutralen Biegefaser, also im Druckspannungsbereich des Riemens befindet. Ebenfalls unterhalb der neutralen Biegefaser befindet sich der Bereich zwischen den Riemenzähnen, in den die Zähne des Spann- und Dämpfungselementes eingreifen und über diesen Kontakt die Spannkraft des Ringes auf den Riemen übertragen wird. Infolge dessen tritt beim gezahnten Riemen gegenüber dem gestreckten Zustand immer eine Verringerung sowohl des Zahnteilungsabstandes als auch des Teilungsabstandes der Zahnlücken auf. Sobald das Getriebe unter Last betrieben wird, kommt es zu einer unsymmetrischen Änderung der Trumauslenkung sowie infolge dessen zu einer unsymmetrischen Änderung der wirksamen Radien des ringförmigen Spannelementes im Lasttrum- sowie im Leertrumbereich gegenüber den wirksamen Radien im Zustand ohne Last. Der Lasttrum des gezahnten Riemens verläuft im Lastfall zunehmend gestreckt und über einen gegenüber dem unbelasteten Zustand größeren Ringradius mit entsprechend verkleinerten Zahnkopfabstand, während der Leertrum im Lastfall zunehmend stärker ausgelenkt über einen gegenüber dem unbelasteten Zustand kleineren Ringradius mit entsprechend vergrößertem Zahnkopfabstand verläuft.
Wird das Getriebe unter Last betrieben, verändern sich also die wirksamen Krümmungsradien des Spann- und Dämpfungselementes und des gezahnten Riemens gegenüber dem Zustand ohne Last sowohl absolut in Abhängigkeit von der Größe des zu übertragenden Drehmomentes als auch relativ im Verhältnis zwischen dem Bereich des Lastrumeingriffs und dem Bereich des Leertrumeingriffs.
Das besondere, nachteilige Eingriffsverhalten dieses Spann- und Dämpfungselementes besteht darin, dass im Lasttrumbereich die Zähne des Spannelementes mit temporär verkleinertem Abstand in die Zahnlücken des gezahnten Riemens mit temporär vergrößertem Abstand eingreifen und im Leertrumbereich die Zähne des Spannelementes mit temporär verkleinertem Abstand in die Zahnlücken des gezahnten Riemens mit temporär verkleinertem Abstand eingreifen.
Damit ist das Eingriffsverhalten dieses Spann- und Dämpfungselementes widersprüchlich zur Veränderung des Zahnkopf- bzw. Zahnlückenabstandes im lasttrumseitigen Eingriffsbereich.
Daraus, dass das Zahnprofil des Spann- und Dämpfungselementes im Betriebszustand unter Last nicht zum Zahnprofil des gekrümmten Riemens im Last- bzw. Leertrumbereich gleichermaßen passend ist, folgen ein unpräziser, von periodischen Schwingungen überlagerter Lauf des Spann- und Dämpfungselementes, erhöhter Verschleiß der Arbeitsflanken der Zähne am Riemen und am Spann- und
Dämpfungselement selbst sowie unerwünscht hohe Laufgeräusche.

Die technische Ursache dieses Nachteils ist die radial außenseitig der neutralen Biegefaser des spannkrafterzeugenden Ringteiles integrierte Anordnung des Zahnprofils des Spann- und Dämpfungselementes.
Je weiter das Zahnprofil von der neutralen Biegefaser angeordnet ist, desto stärker wirkt diese technische Ursache nachteilig auf die unerwünschte Schließbewegung der Zahnlücken sowie auf die ungleichmäßige Biegesteifigkeit des Spann- und Dämpfungselementes.
Ein weiterer Nachteil dieser Vorrichtung besteht darin, dass der gezahnte Spannring einer schnellen Biegewechselermüdung unterliegt, welche eine schnelle Degression der Spannkraft gegenüber dem Synchronriemen und damit eine schnelle Degression der Vorspannkraft des Synchronriemens bewirkt.
Die Bereiche unter den Zahnlücken weisen infolge ihres kleineren biegebelasteten Querschnitts eine kleinere Biegesteifigkeit auf als die Bereiche unter den vergleichsweise starren Zähnen.
Dadurch ist die Biegearbeit, die Erwärmung und die Verringerung des temperaturabhängigen
Elastizitätsmoduls während der ellipsenähnlichen Verformung des elastischen Spannringes in die Bereiche unter den Zahnlücken konzentriert.

Die technische Ursache dieses Nachteils sind die sehr großen Querschnittsunterschiede zwischen den Bereichen der Zahnlücken und den Bereichen der Zähne des Spann- und Dämpfungselementes. Je größer diese Unterschiede sind, desto nachteiliger wirkt sich diese ungleichmäßige Biegefestigkeit auf das Betriebsverhalten dieses Spann- und Dämpfungselementes aus.

Ferner ist aus der DE 101 36 824 C1 ein Spann- und Dämpfungselement für Synchronriemengetriebe bekannt, welches als ringförmiges, elastisch rotational verformbares Element zwischen Lasttrum und Leertrum angeordnet ist und ständig auf beide Trume mit gleicher diametral gerichteter Spannkraft und gleicher Dämpfung wirkt.
Wird eine der Riemenscheiben angetrieben, kommen die Trume in eine gegenläufige Bewegung und wegen des Reibschlusses der Mantelfläche des Ringes zum Synchronriemen kommt dieser in Drehbewegung.

Dieses Spann- und Dämpfungselement löst das Problem der Zahndeformationen. Es verbleibt aber der Nachteil dieses Spann- und Dämpfungselementes, dass es nicht für Getriebe mit unterschiedlichen Scheibendurchmessern einsetzbar ist. Der bei diesen Getrieben bestehende, in Richtung der größeren Riemenscheibe gespreizte Verlauf der Trume führt zur Positionsveränderung des Spann- und Dämpfungselementes in Richtung der Stelle zwischen den Trumen mit dem größten Trumabstand und letztendlich zur schädlichen Kollision mit der Riemenscheibe.

Die technische Ursache dieses Nachteils ist die ohne jegliches Zahnprofil ausschließlich reibschlüssige Lagesicherung des Spann- und Dämpfungselementes in der Rotationsebene des Getriebes.

Ziel der Erfindung ist ein Spann- und Dämpfungselement für Synchronriemengetriebe, welches einen ruhigen und schwingungsarmen Lauf mit hoher Zuverlässigkeit und langer Lebensdauer der Bauelemente gewährleistet.

Aufgabe der Erfindung ist ein Spann- und Dämpfungselement für Synchronriemengetriebe mit einem nicht radial außenseitig der neutralen Biegefaser des spannkrafterzeugenden Ringteiles angeordnetem Zahnprofil und mit reduzierten Querschnittsunterschieden zwischen den Bereichen der Zahnlücken und den Bereichen der Zähne.

Die Aufgabe wird durch die Merkmale des Anspruchs 1 gelöst.

Das Spann- und Dämpfungselement hat die geometrische Grundform eines Kreiszylinders. Die konzentrischen Leitkurven der Grundfläche und der Deckfläche dieses Kreiszylinders werden von zwei konzentrischen Ringen dargestellt. Der Mantel des Zylinders wird durch mehrere, die beiden Ringe verbindende parallele Zahnstege dargestellt.
Das Spann- und Dämpfungselement ist somit ein elastisch verformbares Rad mit zwei außenliegenden Ringen im Abstand der Synchronriemenbreite, gemessen über die lichte Weite, und mit parallelen Zahnstegen, welche im gleichen oder im kleineren Teilungsabstand wie die Zähne des ungekrümmten Synchronriemens zwischen den Ringen angeordnet sind.

Die Ringe sind das Spannkraft und Dämpfung erzeugende Arbeitsorgan und werden deshalb nachfolgend als Arbeitsringe bezeichnet. Die Arbeitsringe des Spann- und Dämpfungselementes sind radial querschnittshomogen und damit radial homogen biegesteif.
Bei Biegebelastung wird die Zug- und Druckspannung auf alle Umfangsbereiche der Arbeitsringe gleichmäßig verteilt und ein harmonisierter Spannungsverlauf in den Arbeitsringen bewirkt.
Eine nachteilige Konzentration der Biegearbeit, der Erwärmung und die Verringerung des temperaturabhängigen Elastizitätsmoduls während der ellipsenähnlichen Verformung des elastischen Spannringes in einzelne Bereiche der Arbeitsringe ist damit ausgeschlossen; das Belastungs- und Verschleißverhalten des Spann- und Dämpfungselementes wird verbessert.
Der Teilkreis für den Teilungsabstand der Zahnstege ist der Kreis, welcher dem Umlaufkreis der neutralen Biegefaser entspricht. Die Teilung der Zahnstege ist infolge der Trumkrümmung des Synchronriemens gleich oder kleiner als die Teilung des Synchronriemens.
Minimale Gesamtabweichungen zwischen dem Spann- und Dämpfungselement und dem Synchronriemen für die beiden Phasen des Einlaufes, der maximalen Krümmung im Leertrum und für beide Phasen des Auslaufes liegen dann vor, wenn der Teilkreis der Zahnstege, die neutrale Biegefaser der Arbeitsringe und die Wirklinie des Getriebes identisch sind.
Die Erfüllung dieser Bedingung ist durch zeichnerische Darstellung in Verbindung mit der vereinfachten Definition der mittels Linie darstellbaren neutralen Biegefaser im konzentrischen Ring und der ebenfalls mittels Linie darstellbaren Wirklinie des Getriebes (in Anlehnung an den Begriff der Wirklinie des Synchronriemens und der Synchronriemenscheibe) bei der Konstruktion des Spann- und Dämpfungselementes realisierbar.

Die Zahnstege sind das Lagesicherungs- und Antriebsorgan des Spann- und Dämpfungselementes und verlaufen zwischen den Arbeitsringen.
Der die Zahnstege umschließende Kopfkreis ist gleich oder kleiner als der äußere Mantelkreis der Arbeitsringe. Damit wird die Lagesicherung in der Umlaufebene des Spann- und Dämpfungselementes realisiert.

Die Zahnstege sind im Bereich der neutralen Biegefaser mit den Arbeitsringen gekoppelt.
Bei der elastischen Verformung der Arbeitsringe in eine ellipsenähnliche Form sind die Zugspannung und die Druckspannung neutralisiert.
Die Zahnstege sind dadurch entkoppelt von der Verformung der Arbeitsringe und das Einlaufverhalten des Spann- und Dämpfungselementes ist nicht mehr widersprüchlich zu den Veränderungen der Zahnlückenweite des Synchronriemens im jeweiligen Eingriffsbereich.

Die Zahnstege sind um ihre Längsachse elastisch schwenkbar angeordnet.
Damit sind sie toteranzfähig sowohl zu den Zahnlücken des Synchronriemens im gestreckten Lasttrum als auch zu den stärker verkleinerten Zahnlücken des Synchronriemens im Leertrum.
Die Schwenkbarkeit der Zahnstege wird vorteilhaft realisiert durch beidseitige Querschnittsverengungen der Übergänge der Zahnstege zu den Arbeitsringen.
Um Pressungen zwischen den Zahnstegen und den sich schließenden Zahnlücken des Synchronriemens zu vermeiden, ist die Breite der Zahnstege kleiner als die Zahnlückenweite des Synchronriemens bei maximalem Schließmaß im maximal gekrümmten Leertrum.
Das Einlaufen der Zahnstege in das Zahnprofil des Synchronriemens erfolgt zahnlücken- und- teilungskorrespondent ohne Reibung und ohne Pressung der Zahnstege gegen das Zahnprofil.
Dadurch werden der Verschleiß des Spann- und Dämpfungselementes und des Synchronriemens sowie die Laufgeräusche verringert.

Durch seine Elastizität ist das Verhalten des ellipsenähnlich und damit indifferent verformten Spann- und Dämpfungselementes im realisierten Eingriff und im Auslauf aus dem Kontakt zum Synchronriemen selbsteinstellend zu den temporären Veränderungen der Zahnlückenweite des Synchronriemens im jeweiligen Eingriffs- und Auslaufbereich.

### Ausführungsbeispiel

Die Erfindung soll an einem Ausführungsbeispiel näher erläutert werden. Die dazugehörigen Zeichnungen zeigen:
- Figur 1: eine dreidimensionale Ansicht eines Spann- und Dämpfungselementes mit Arbeitsringen und Zahnstegen;
- Figur2: eine Darstellung des Verlaufs der neutralen Biegefaser im ellipsenähnlich verformten Spann- und Dämpfungselement;
- Figur 3: eine Schnittdarstellung eines Spann- und Dämpfungselementes mit einem mit Zugkraft belasteten Synchronriemen im Last- und Leertrumeingriff

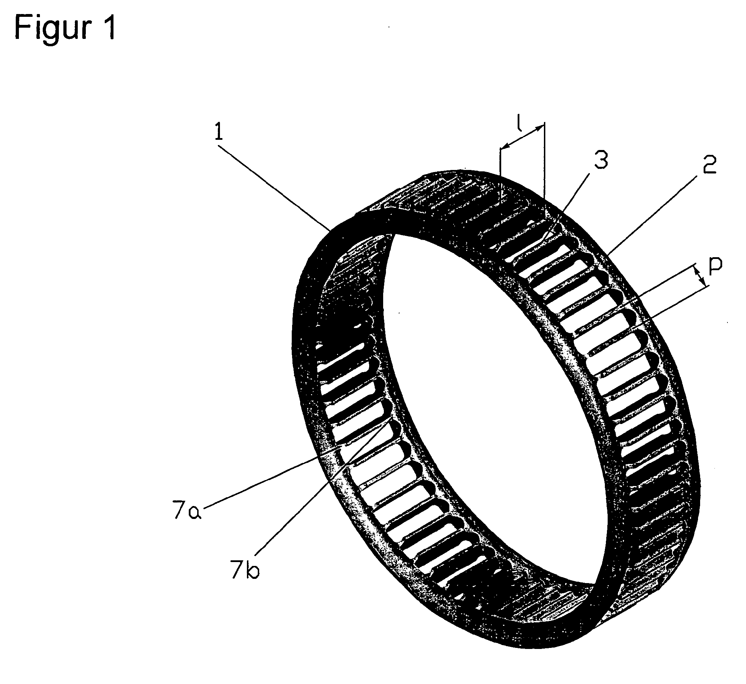

Wie aus Figur 1 ersichtlich, besteht das rotationssymmetrische Spann- und Dämpfungselement aus dem linken Arbeitsring 1 und dem rechten Arbeitsring 2 sowie aus den die beiden Arbeitsringe einstückig verbindenden Zahnstegen 3. Als Werkstoff für das Spann- und Dämpfungselement kommt ein Elastomer zur Anwendung. Die Arbeitsringe weisen gleiche Biegesteifigkeit auf.
Die Arbeitsringe sind zueinander ebenengleich im Abstand l_{z} langeordnet. Der Abstand l_{z} ist die Summe aus der Synchronriemenbreite und dem üblichen Führungsspiel zwischen Synchronriemen und Zahnscheibe.
Die Zahnstege sind parallel zur Rotationsachse angeordnet.
Die Teilung p der Zahnstege ist in Anpassung an die Krümmung des Synchronriemens gleich oder kleiner als die Teilung t des Synchronriemens.

Der Mantelkreis D_{M} der Arbeitsringe ist größer als der die Zahnstege umschließende Kopfkreis D_{K} . Dieser Mantelkreis muss mindestens gleich dem Kopfkreis sein, um die Lagesicherung des Spann- und Dämpfungselementes in der Rotationsebene des Getriebes zu gewährleisten.
Damit ist das Spann- und Dämpfungselement selbsthaltend greiffähig zum Lasttrum 4 und zum Leertrum 5 des Synchronriemens.

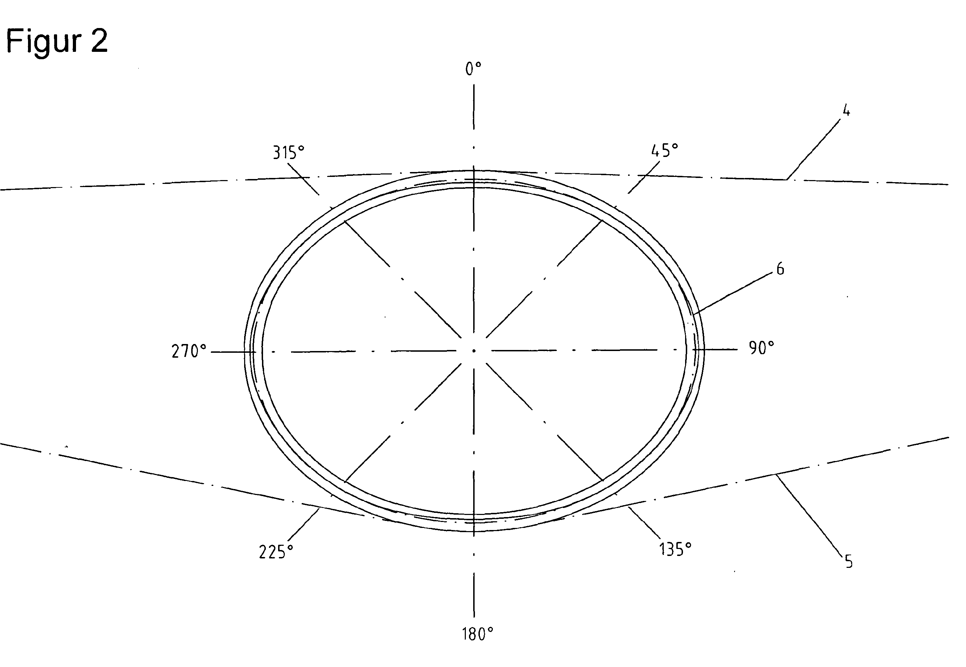

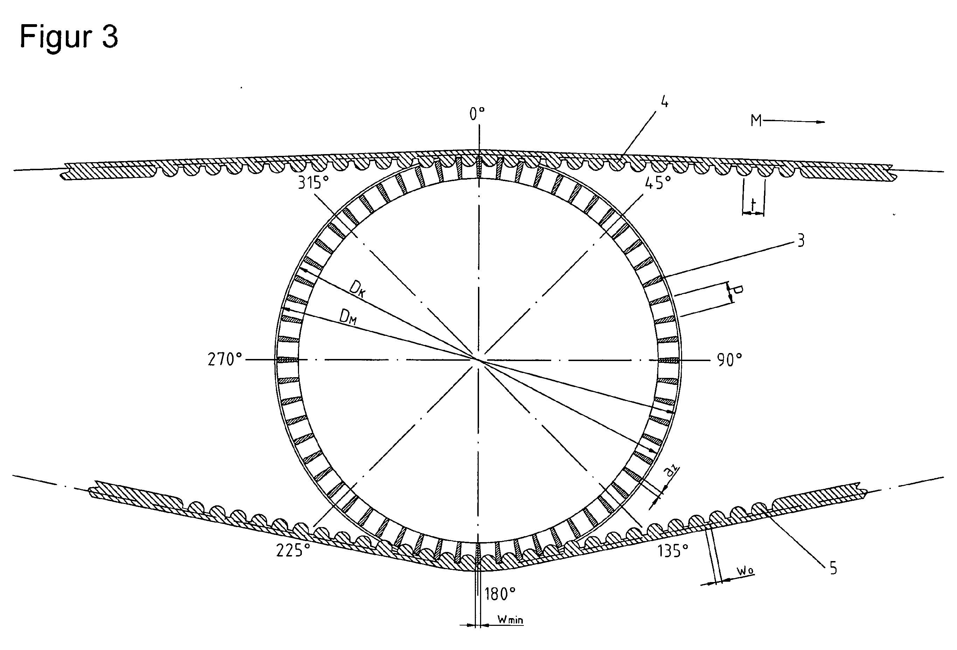

Die Zahnstege sind im Bereich der neutralen Biegefaser 6, dargestellt in Figur 2, angeordnet.
Die neutrale Biegefaser verläuft bei ellipsenähnlicher Verformung des Spann- und Dämpfungselementes infolge der unterschiedlichen Druck- und Zugfestigkeit sowie der Zeit- und Temperaturabhängigkeit des Verformungsverhaltens des Elastomers schwankend.
In Vereinfachung soll deshalb gelten, dass alle Querschnittsbereiche der Arbeitsringe innerhalb der von der neutralen Biegefaser begrenzten Bereiche spannungsminimal sind.
Infolge dieser Anordnung der Zahnstege sind bei der elastischen Verformung der Arbeitsringe in eine ellipsenähnliche Form die auf die Arbeitsringe wirkenden Zug- und Druck- Wechselspannungen minimiert und phasenweise bei 45°, 135°, 225°, 315° vollständig entkoppelt.
Die Zahnstege sind dadurch zugleich weitestgehend entkoppelt von der rotationalen Biegewechselbelastung der Arbeitsringe. Außerdem haben sie nur einen sehr kleinen Einfluss auf die querschnittsabhängige Biegesteifigkeit der Arbeitsringe. Temporäre Stauchungen der Zahnstege und Teilungsverschiebungen durch Biegewechsel treten nicht auf.
Die Übergänge 7a, 7b der Zahnstege zu den Arbeitsringen weisen Querschnitte auf, welche durch eine Querschnittsreduzierung weniger biegesteif sind als die Zahnstege. Sie sind damit sowohl stärker in der neutralen Biegefaser konzentriert als auch schwenkbar für die elastische Kompensation der Zahnlückendeformation und der Ungleichförmigkeit der Momentübertragung des Synchronriemens.
Der Einlauf der Zahnstege des rechtsdrehenden Spann- und Dämpfungselementes in das Zahnprofil des Synchronriemens erfolgt, wie in Figur 3 gezeigt, zwischen den Phasen von 315° bis 0° lasttrumseitig und von 135° bis 180° leertrumseitig. Der Auslauf der Zahnstege des Zahnprofils erfolgt in den Phasen 0° bis 45° lasttrumseitig und von 180° bis 225° leertrumseitig.
Dabei erfolgen Einlauf und Auslauf stets in Phasen, in denen die Zahnlücken des Synchronriemens infolge seiner Krümmung nicht minimal sind.
Die minimale Zahnlücke wₘᵢₙ des Synchronriemens befindet sich im Leertrum bei der 180°-Phase des Spann- und Dämpfungselementes. Pressungen zwischen den Zahnstegen mit der Dicke a_{z} und den Zahnlücken sind wegen der Dimensionierung a_{z} < wₘᵢₙ < w₀ entsprechend der maximalen Krümmung im Leertrum ausgeschlossen. Die polygonisch verursachte Ungleichförmigkeit der Momentübertragung des Synchronriemens wird durch die elastisch schwenkbaren Zahnstege kompensiert.

Durch die Erfindung wird sowohl ein schwingungsarmer und geräuscharmer Lauf des Spann- und Dämpfungselementes als auch ein geringer Ermüdungs- und Abrasionsverschleiß erreicht.

## Patentansprüche

1. Spann- und Dämpfungselement für Synchronriemengetriebe, welches als ringförmiges, elastisch zwischen der konzentrischen Form und einer ellipsenähnlichen Form verformbares Element zwischen Lasttrum (4 ) und Leertrum (5 ) angeordnet ist und ständig auf beide Trume mit gleicher diametral gerichteter Spannkraft und gleicher Dämpfung wirkt, **gekennzeichnet durch** einen rotational elastischen Käfig mit der geometrischen Grundform eines Kreiszylinders aus radial in einer zum Synchronriemen formkorrespondenten Teilung zwischen zwei gleiche Biegesteifigkeit aufweisenden elastischen Arbeitsringen (1, 2) parallel zur Rotationsachse und radial innenseitig aus der neutralen Biegefaser (6) der Arbeitsringe integriert verlaufenden, um ihre Längsachse in den Übergängen (7a, 7b) zu den Arbeitsringen elastisch schwenkbar angeordneten Zahnstegen ( 3), deren Breite a_{z} kleiner ist als die Zahnlückenweite (wₘᵢₙ) des Synchronriemens bei dessen maximaler Krümmung im Leertrum.

2. Spann- und Dämpfungselement nach Anspruch 1, **dadurch gekennzeichnet, dass** der die Zahnstege umschließende Kopfkreis ( D_{K}) gleich oder kleiner ist als der äußere Mantelkreis (D_{M}) der Arbeitsringe und dass die Übergänge zwischen Arbeitsringen und Zahnstegen einen kleineren Querschnitt aufweisen als die Zahnstege.

3. Spann- und Dämpfungselement nach Anspruch 1 und 2, **dadurch gekennzeichnet, dass** in der konzentrischen Form des Spann- und Dämpfungselementes, bezogen auf die Soll-Montageposition im Getriebe, der Teilkreis der Zahnstege, die neutrale Biegefaser der Arbeitsringe und die Wirklinie des Getriebes identisch sind.
